# EUROPEAN PATENT SPECIFICATION

(11) **EP 0 487 317 B1**
(45) Date of publication and mention of the grant of the patent: **28.10.1998**
(21) Application number: 91310673.8
(22) Date of filing: 20.11.1991
(51) Int. Cl.: G06F 9/38

(54) **Processor and method for parallel processing**
Prozessor und Verfahren zur parallelen Verarbeitung
Processeur et méthode de traitement en parallèle

(30) Priority: 20.11.1990 JP 314607/90
(43) Date of publication of application: 27.05.1992
(73) Proprietor: FUJITSU LIMITED, Kawasaki-shi, Kanagawa 211 (JP)
(72) Inventor: Katsuno, Akira, c/o Fujitsu Limited, Kawasaki-shi, Kanagawa 211 (JP)
(74) Representative: Fane, Christopher Robin King

(56) References cited:
- PATENT ABSTRACTS OF JAPAN vol. 014, no. 201 (P-1041)4 April 1990 & JP-A-2 042 534 ( TOSHIBA CORP. ) 13 February 1990
- IEEE TRANSACTIONS ON COMPUTERS. vol. C-36, no. 12, December 1987, NEW YORK US pages 1496 - 1514 WEN-MEI W. HWU, Y. N. PATT 'Checkpoint Repair for High-Performance Out-of-Order Execution Machines'

## Description

The present invention relates to a processor comprising a plurality of operating units for executing a parallel process.

One method of improving the processing speed of a processor is to provide a plurality of operating units for executing a parallel process.

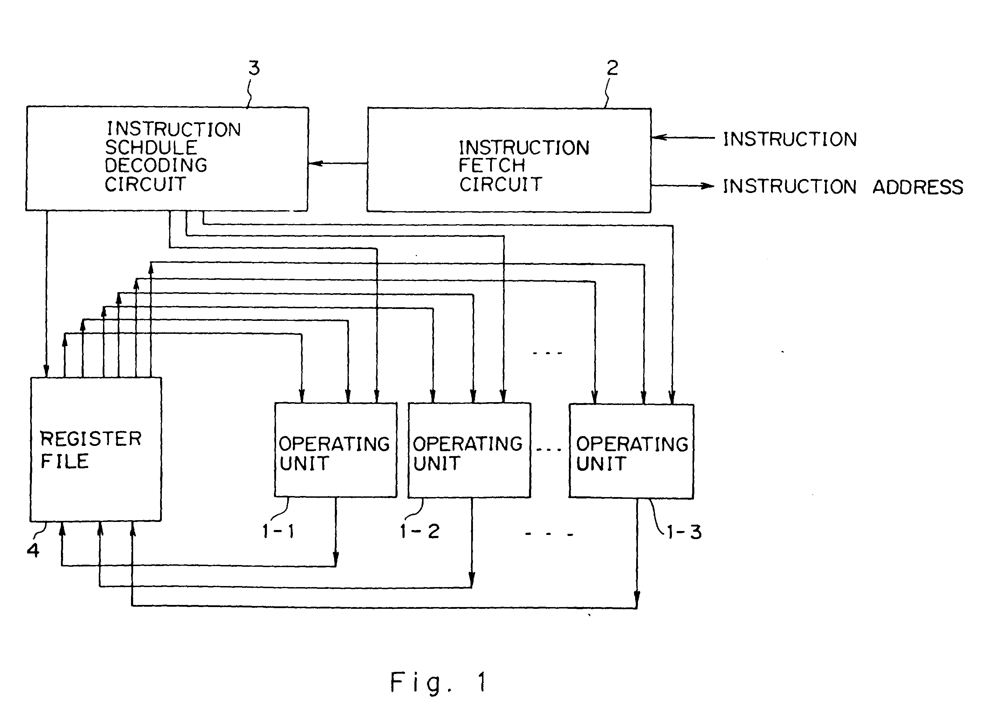

Figure 1 shows a configuration of a previously-considered processor including a plurality of operating units 3-1 to 1-3.

In this processor, an instruction fetch circuit 2 reads an instruction stored in a main memory, not shown in Figure 1. The read address equals the value indicated by a program counter provided in the instruction fetch circuit 2.

An instruction read by the instruction fetch circuit 2, that is, a so-called instruction, is applied to an instruction schedule decoding circuit 3. The instruction schedule decoding circuit 3 decodes the instruction to determine its nature, and determines a corresponding operating schedule. Then, it controls the plurality of operating units 1-1 to 1-3 according to its its operating schedule.

The operating units 1-1 to 1-3 are connected to a register file 4. The operating units 1-1 to 1-3 read the contents of the register file 4, and store the operation results in it.

The register file 4 comprises a plurality of registers. The output of the operating units 1-1 - 1-3 is stored in a register specified by the instruction schedule decoding circuit 3. The instruction schedule decoding circuit 3 outputs a register address, and a register in the register file 4 specified by the register address is activated to output and store data.

The configuration shown in Figure 1 comprises a plurality of operating units 1-1 - 1-3, and the instruction schedule decoding circuit 3 controls them to work in parallel, thus improving the execution speed of a program in the main memory. A processor normally executes programs sequentially, so attempting to process such programs in parallel may not always be efficient. The main reason for this is as follows:

For example, assume that in a first program step, a sum of a register R0 and a register R1 is applied to the register R0, and the program branches, in a conditional branch instruction, according to the contents of the register R0. A second program step, i.e. a further instruction included in the program after the branch instruction in the program, will not necessarily be executed, so execution of this further instruction before the branch instruction is not possible.
Therefore, in the prior art technology, instructions written before and after a branch instruction cannot be executed in parallel.

Generally, the frequency of branch instructions in a program is comparatively large. For example, in a typical operating system, one-third of a program is occupied by branch instructions. Therefore, the performance of a processor depends greatly on whether or not instructions before and after a branch instruction can be executed in parallel.

Generally, an instruction may be issued to be executed irregularly in the program sequence so that instructions can be executed concurrently and efficiently. In this case, the instructions may not be executed and terminated sequentially, that is, a following instruction can jump a preceding instruction to update the content of a register. Then, an interrupt arises, and a proper interrupt process may not be performed or the program may not be restarted after an appropriate interrupt process if instructions after the interrupting instruction have already updated the content of the register.

EP-A-0285310 discloses a processor which may be considered to include register means having a plurality of sets of registers, each such register set having an individually-corresponding address and comprising plural registers (R0i to RMi) that are all addressable using that individually-corresponding register address; selection information storing means having a plurality of selection information storing elements corresponding respectively to the said register sets, each such element being addressable using the register address of its corresponding register set and serving to store selection information for its corresponding register set for use in identifying which of the registers of that set was last selected in a predetermined selection sequence of the registers of the set; and register selection control means operable, during a write operation in which one of the register sets is addressed using its said register address and data is written in one of the registers of the addressed register set, to employ the said selection information stored in the selection information storing element corresponding to the addressed register set to select the next-available one of the registers of that set for the storage of the data, and to update the stored selection information for the register set concerned. This processor has two registers (front and back cells) per register set and the selection information is a selection flag which indicates whether the front or back cell is currently selected. When first information is stored in one of the two cells, second information can be written into the other of the two cells so that the first information is held and need not be saved to a main memory. The first information can also be rapidly restored, if required. However, the processor concerned has only one operating unit (CPU) and is used to perform multi-tasking. The two cells of each register set enable rapid switching between two different tasks.

A processor embodying a first aspect of the present invention is characterised in that the processor has a plurality of operating units and is operable to perform parallel processing in which a first instruction of a program is executed by one of the operating units whilst a second instruction of the program, following the said first instruction in the written sequence of instructions of the program, is executed by another one of the operating units; and in that the processor further includes determination information storing means having a plurality of determination information storing elements corresponding respectively to the said register sets, each such element being addressable using the said register address of its said corresponding register set and serving to store determination information for its said corresponding register set, indicating whether or not the data written in such a write operation is known to constitute valid data, and also includes write judgement means operable, when in the course of the said parallel processing it is not certain that the said second instruction will follow the said first instruction in the actual execution sequence of the program, to provisionally store, in the said determination information storing element corresponding to the register set addressed in such a write operation called for by execution of the said second instruction, first determination information, indicating that any data written in the write operation concerned is not known to constitute valid data, whereupon the second instruction is executed, and, only when it is determined that the said second instruction will follow the first instruction in the actual execution sequence of the program, to store, in place of the said first determination information, second determination information indicating that the written data is known to constitute valid data.

According to a second aspect of the present invention there is provided a parallel processing method, for use in a processor that includes a plurality of operating units and also includes a plurality of sets of registers, each set comprising plural registers, which method comprises the steps of: employing, during a write operation for writing data to an addressed register set, stored selection information, corresponding to the addressed register set and serving to identify which of the registers of the set was last selected in a predetermined selection sequence of the registers of that set, to select the next-available one of the registers of that set for the storage of the data, and updating the stored selection information corresponding to the addressed register set; performing parallel processing in which a first instruction of a program is executed by one of the operating units whilst a second instruction of the program, following the said first instruction in the written sequence of instructions of the program, is executed by another one of the operating units; and judging whether, in the course of such parallel processing, it is not certain that the said second instruction will follow the said first instruction in the actual execution sequence of the program and, if it is not certain, provisionally storing first determination information, corresponding to the register set to be addressed in such a write operation called for by the said second instruction and indicating that any data written in that write operation is not known to constitute valid data, whereupon the said second instruction is executed, and, only when it is determined that the said second instruction will follow the said first instruction in the said actual execution sequence, storing, in place of the stored first determination information, second determination information indicating that the written data is known to constitute valid data.

In such a processor comprising a plurality of operating units, and in such a processing method, an instruction written after a branch instruction can be executed, in parallel with an instruction preceding the branch instruction, before executing the branch instruction and an appropriate interrupt process can be performed even when an out-of-order, that is, irregular execution of instructions is permitted in the program sequence.

Reference will now be made, by way of example, to the accompanying drawings, in which:
Figure 1 shows a configuration of a processor according to a prior art technology;
Figure 2 shows parts of a processor embodying the present invention;
Figure 3 shows the configuration of a processor according to a first embodiment of the present invention;
Figures 4A to 4D are diagrams for use in explaining changes in contents of a register and a flag when data C are written in a register Ri;
Figure 5 shows a flowchart for use in explaining parallel processing of instructions written before and after a branch instruction;
Figure 6 shows the configuration of a processor according to a second embodiment of the present invention; and
Figure 7 shows a flowchart of an instruction input process.

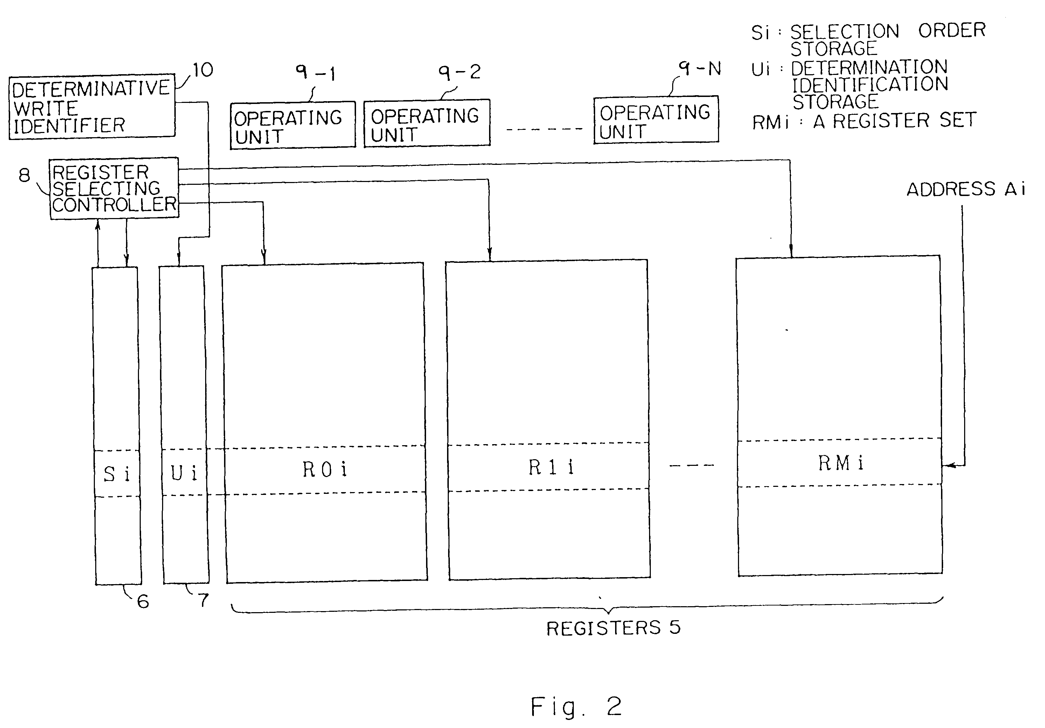

Figure 2 shows parts of a processor embodying the present invention. A basic principle of the present invention is described first. A processor embodying the present invention comprises a plurality of operating units 9-1 - 9-N for performing a parallel process.

5 indicates registers and comprises plural sets (L sets) of registers R0i, R1i, ---, RMi (i=1 - L), which are specified with the same address. These registers R0i, R1i, ---, RMi are accumulators for the operating units.

6 indicates selection sequence storages (selection information storing means). A selection sequence storage (selection information storing element) Si for indicating a past selection in a predetermined selection sequence of the i-th set of register R0i, Rli, ---, RMi is provided for each set, and a selection sequence storage Si corresponding to each register is specified with the register designation address Ai. The selection sequence storage Si comprises, for example, an (M-1)-carry counter. Every time the i-th set of registers is selected, the counter is incremented and the registers R0i, R1i, ---, RMi are specified cyclically in this order. For example, if the counter indicates a value 2 with M=3, the previous selection sequence is 2, 1, 0, 3, and the latest data are stored in a register R2i.

7 indicates determination identification storages (determination information storage means), which comprise one determination identification storage (determination information storing element) Ui for each register set for storing determination information relating to the content of each register R0i, R1i, ---, RMi (i.e. information indicating whether or not the register content concerned is known to constitute valid data). A determination identification storage Ui corresponding to each register set is specified with the register specification address Ai.

8 indicates a register selection controller, which, when data are written to a register, selects one of the registers of the register sets R0i, Rli, ---, RMi according to the content of the selection sequence storage Si having the specified address Ai and updates the contents of the selection sequence storage Si. When the selection sequence storage Si comprises the above-mentioned counter, the contents of the selection sequence storage Si are updated by incrementing the counter.

10 indicates a determinative write identifier (write judgement means), which rewrites the contents (determination information) of the determination identification storage Ui at the specified address Ai depending on whether or not a write is determined to have been correct (i.e. the actual execution order of instructions requires the write concerned).

In a processor having the above described configuration, the contents of registers are read depending on the contents of each selection sequence storage Si and determination identification storage Ui. Using a processor embodying the present invention, an original state can be restored according to the contents of the selection sequence storage Si even though an instruction written after a branch instruction is executed in parallel with other instructions prior to the execution of the branch instruction and even though the process results in the no branch state. Therefore, an instruction written after a branch instruction can be executed in parallel prior to the execution of the branch instruction, thus improving the processing speed of a processor.
Additionally, the processing speed of a processor can be increased when an interrupt or an exception condition exists in addition to a branch instruction. A processor embodying the present invention preferably comprises (not shown in Figure 2), in addition to the above described configuration, a write reservation flag and a write reservation identifier for easily controlling a possible write conflict (i.e. two attempts to write to a register at the same address) associated with a parallel process.

The write reservation flags for indicating whether or not a write of data reservation is properly made to a corresponding register are assigned respectively to the register sets, thereby providing a write reservation flag corresponding to the register R0i, Rli, ---, RMi at the register specification address Ai.

The write reservation identifier rewrites the contents of the write reservation flag to indicate that a write reservation is made at the write instruction decoding process when data are written to a corresponding register, and that the reservation is cancelled after the completion of the write.

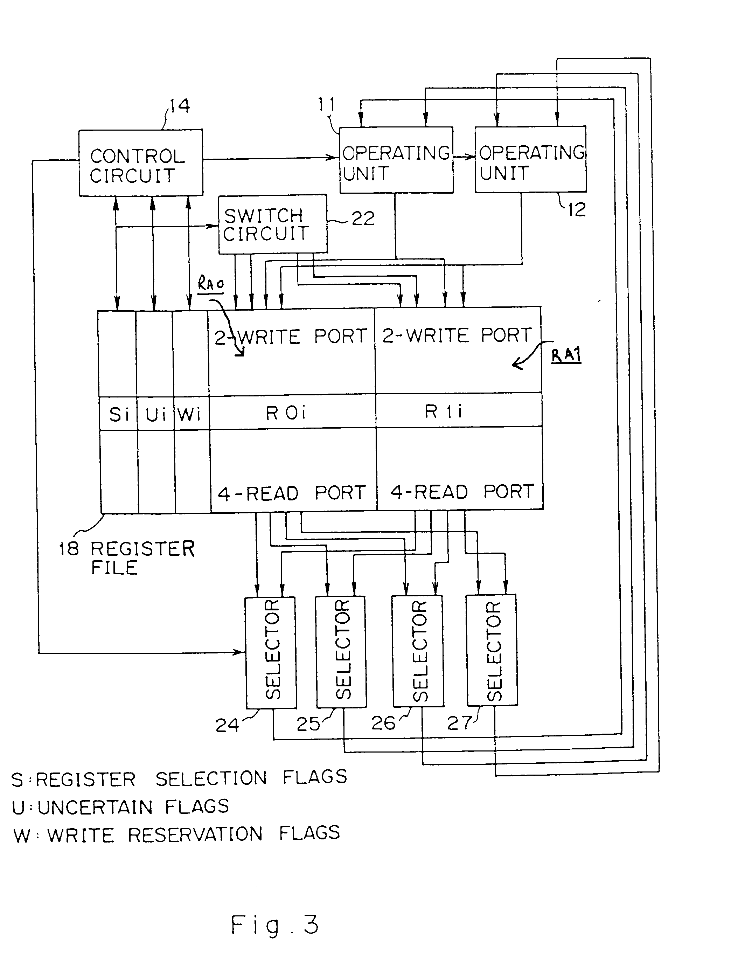

Figure 3 shows a configuration of a processor according to a first embodiment of the present invention.

This processor comprises respective operating units 11 and 12 having the same configuration as one another, and performs a parallel process under the control of a control circuit 14. Both operation results provided by the operating units 11 and 12 are selected and supplied to a register file 18 simultaneously.

The register file 18 comprises register sets RA0 and RA1, register selection flags S, uncertain flags U, and write reservation flags W. A set of these components R0i, R1i, Si, Ui, and Wi (i = 1 - M) are specified simultaneously with the address Ai. The registers R0i and R1i make a pair, and either of them may be used as a register in a program. A register R0i or R1i cannot be specified directly in a program, but must be specified by hardware. The registers RA0 and RA1 comprise memories having two write ports and four read ports. Respective outputs of the 4 read ports are selected by selectors 24, 25, 26 and 27 and are applied to operation units 11 and 12. The two write ports are designated by a control signal of switching circuit 22 at the time of a write. In detail, one set of components in the register file 18 comprising a register R0i, R1i, register selection flag Si, uncertain flag Ui, and write reservation flag Wi is regarded as a register Ri in executing a program.

For example, when a register Ri is a destination register in a program, either the register R0i or R1i is selected depending on the contents of the selection flag S. The register R0i is selected when the selection flag shows 0; and the register R1i is selected when it shows 1. The control circuit 14 controls which register to select depending on the value of the selection flag S. The operation unit 11 or 12 performs an operation with a reservation flag Wi of the selected register set to 1. In this embodiment of the present invention, the processor comprises two operating units, either of which is selected by the control circuit 14.

When the operating units 11 and 12 finish the operation, the reservation flag Wi of the selected register is set to 0. If this is the latter process (second instruction) in the parallel process, an uncertain flag is set to 1 until the former process (first instruction) is completed.

The operation of each part according to a register selection flag Si, a reservation flag Wi, an uncertain flag Ui, and their contents is described as follows:

For example, when data Di are written to the register Ri, it is specified as follows: a write enable signal WE inverts the contents of a register selection flag Si, and the inverted contents are read and delivered to a control terminal of a switching circuit 22. When the content is zero (0), the switching circuit 22 applies the write enable signal WE provided thereto to the register group RA0 as a write enable signal WE0, and then selects the register R0i. Likewise, when the content of the register selection flag Si is 1, the switching circuit 22 applies the write enable signal WE provided thereto to the register group RA1 as a write enable signal WE1, and then selects the register R1i.

During the writing process, the uncertain flag Ui is set to 1 by the control circuit 14 if it cannot yet be determined that the present data are written correctly (because the actual execution sequence of instructions is not yet known), and is turned to 0 when this is determined. For example, if an instruction written immediately before this write instruction is not executed completely, Ui equals 1, and is turned to 0 when the execution is completed.

The write reservation flag Wi is set to 1 by the control circuit 14 when a write instruction is decoded, and is set to 0 when the write is completed.

The contents of the registers R0i and R1i are applied to the selectors 24, 25, 26 and 27 when the register is read. The selectors 24, 25, 26 and 27 are selection-controlled by the control circuit 24 according to the contents of the register selection flag Si and the uncertain flag Ui. When the register selection flag Si is set to 0, the contents of the register R1i are selected by the selector 24, and the contents of the register R0i are selected by the selector 26.

That is, two groups of data are read from register file 18 through selectors 24 and 25, and used by operating unit 11 in the operation according to signals provided by the control circuit. Two groups of data read through selectors 26 and 27 are executed by operating unit 12. For example, the output of the selector 24 is applied to the operating unit 11, and the output of the selector 26 is applied to the operating unit 12.

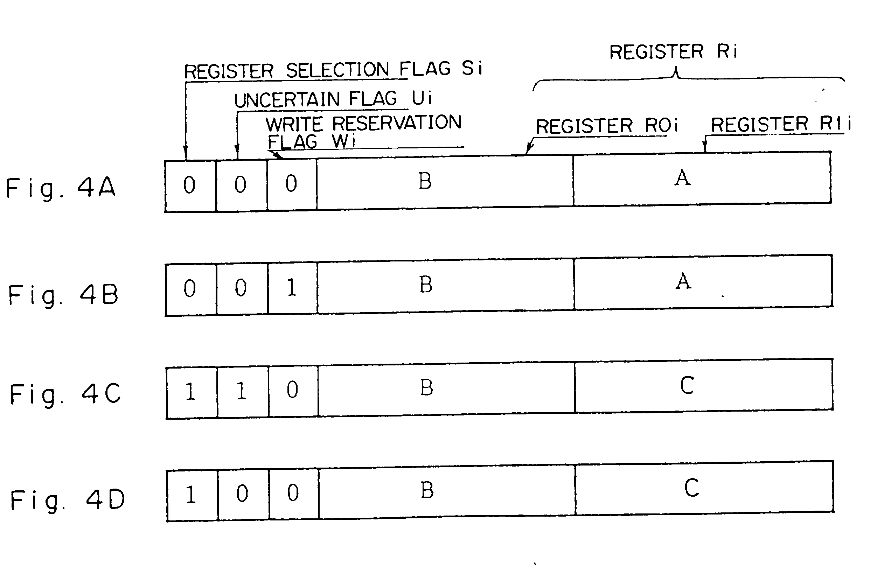

Figures 4A - 4D show the variation of the contents of the register selection flag Si, uncertain flag Ui, write reservation flag Wi, register R0i, and the register R1i when data C are written to the address Ai of the register file 18.

Figure 4A: First, a value B is stored in the register R0i, and a value A is stored in the register R1i. As the register selection flag Si indicates 0, the value B represents new data, and the value A represents old data. As the uncertain flag Ui shows 0, the contents B of the register R0i specified by the register selection flag Si are determined in the execution order of instructions. Besides, as Wi=0, the write to the register R0i is completed.

Figure 4B: The next instruction is executed, and the write reservation flag Wi is set to 1 to reserve the write when a write instruction is decoded.

Figure 4C: The register selection flag Si is set to 1, and the value C indicating an execution result of an instruction is written to the register R1i. When the write is completed, the write reservation flag Wi is set to 0. The uncertain flag Ui is set to 1 to indicate that the write is uncertain to be in the execution order of instructions.

Figure 4D: The uncertain flag Ui is set to 0 when the write instruction is determined to be in the execution sequence of instructions.

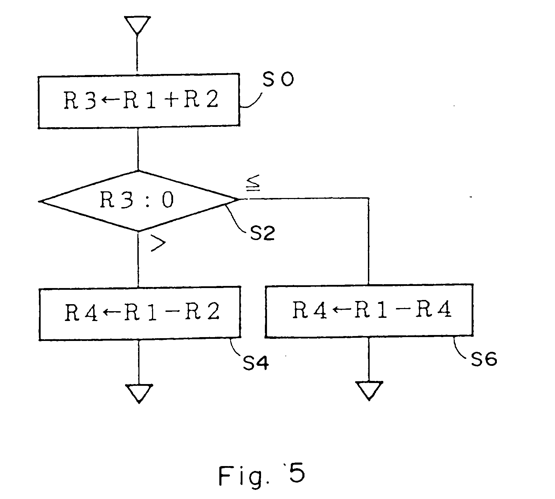

Next, a parallel process of instructions written before and after a branch instruction is described in association with Figure 5.

In step S0 (a first instruction) in a program, the contents of registers R1 and R2 are added and the result is stored in a register R3. In step S2, control is passed to step S4 (a second instruction, following the first instruction in the written sequence of instructions of the program) if R3 > 0. In step S2, control is passed to step S6 if R3 ≤ 0.

To execute a program as described above, step S4 is executed in parallel by the operating unit 12 when step S0 is executed by the operating unit 11. The operation result of step S4 is stored in the register R4, and the contents of the register R4 become "undetermined" new data.

When R3 > 0 is determined in step S2, the contents of the register R4 are known to have correctly determined, and the contents of the register R4 obtained from the selector 26 are used. When R3 ≤ 0 is determined in step S2, the contents of the register R4 obtained through selector 24 are used to execute step S6.

Thus, instructions (e.g. S4) present in a program after a branch instruction (S2) can be executed, in parallel with instructions (S0) preceding the branch instruction, prior to the execution of the branch instruction, thereby improving the performance of the processor.

The present invention encompasses variations on the above described example.

For example, it may comprise three or more operating units for executing the steps S0, S2, and S4 shown in Figure 5 in parallel.

Also, it may comprise three or more registers R0i, R1i, ---, RMi specified with the same address Ai as one set of registers.

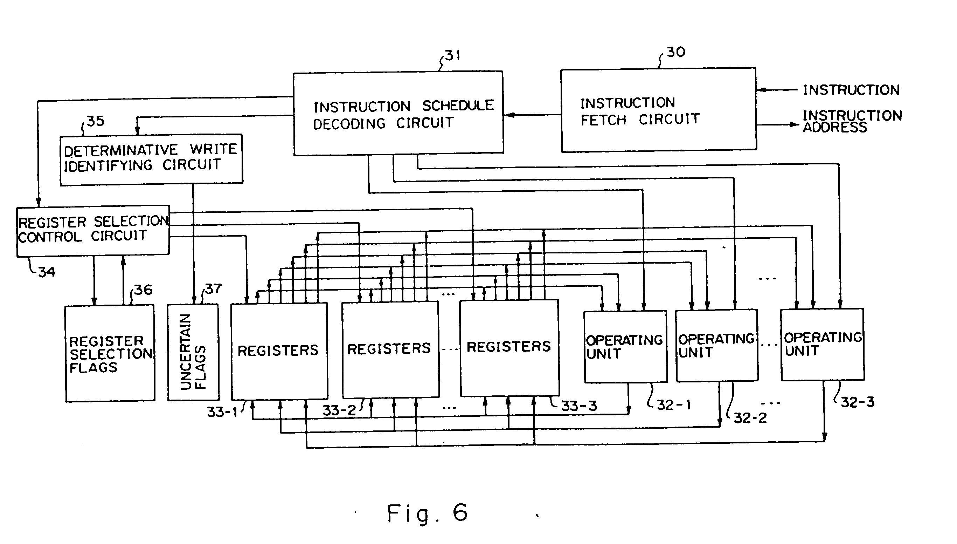

Figure 6 shows a configuration of a processor according to a second embodiment of the present invention.

An instruction fetch circuit 30 reads an instruction string stored in the main memory. The read address is associated with a program counter provided in the instruction fetch circuit. In the prior art technology, an instruction is read from the main memory, the address from which the instruction is read being given by the value of a program counter. In the present embodiment, those instructions at addresses following the address specified by the program counter and those instructions in the main memory area at addresses specified as branching addresses by branch instructions are read. Therefore, the instruction fetch circuit 30 comprises circuits, in addition to a program counter, for outputting such following addresses and such branching addresses, thus enabling the advance processing of instructions using this instruction fetch circuit 30.

Instructions read by the instruction fetch circuit 30 are applied to an instruction schedule decoding circuit 31. The instruction schedule decoding circuit 31 decodes an instruction to identify the instruction and make a schedule of operations corresponding to the instruction, and then controls a plurality of operating units 32-1 - 32-3 according to the operation schedule corresponding to the instruction.

Groups of registers 33-1 - 33-3 are assigned as described above corresponding to the operating units 32-1 - 32-3, and simultaneously, available registers are selected by a register selection control circuit 34 using register selection flags 36, and a determinative write identifying circuit 35 manages the determination/uncertain flag Ui using uncertain flags 37. When three or more registers 33-1 - 33-3 or operating units are selected or assigned, they are processed in the same basic way as described above in the first embodiment in which two units are selected or assigned. For example, in the program shown in Figure 5, the operating units 32-1, 32-2, and 32-3 are assigned to steps S0, S2, and S4 respectively to execute the instructions in parallel.

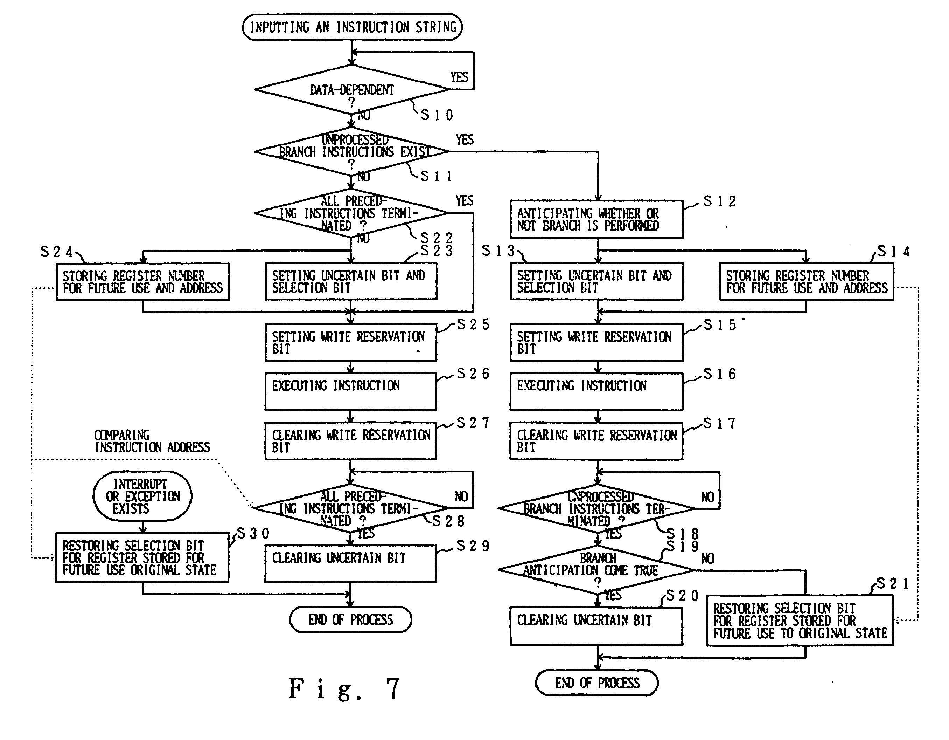

Figure 7 shows a flowchart of an instruction processing by the instruction schedule decoding circuit 31. The process starts every time an instruction string is inputted, and it is determined in step S10 whether or not an inputted new instruction relates to the data currently being processes and is data-dependent. If a new instruction to be processed requires the result of an instruction being currently processed, following instructions cannot be processed in parallel. Accordingly, the determination in step S10 must be repeated until the new instruction is not data-dependent.

When a current process is completed so that the data required by the new instruction have been determined finally in the previous instructions; or when the new instruction is inherently not data-dependent (NO), a determination is made in step S11 as to whether or not unprocessed branch instructions exist. When an unprocessed branch instruction exists (YES), a judgement is made in step S12 as to whether or not it is anticipated that a branch will be made. Such a branch is anticipated, for example, in the case of processes where many branches were made in the former processes or where a zero flag is set, etc. As the first embodiment of the present invention shown in Figure 3 comprises two operating units, one of the pair of outcomes of the branch instruction is selected. When there are many operating units as shown in Figure 6, different processes can be performed corresponding to the possible outcomes of the branch instruction. When anticipation is made in step S12, an uncertain flag and a selection bit are set in step S13. That is, each flag is set with a register selection flag of the corresponding operating unit set. Furthermore, as shown in step S14, a register number for future use is reserved in parallel. The reservation is made for the case where the anticipation does not come true, and the restoration is required. After steps S13 and S14, the write reservation bit for the register stored in step S14 is set in step S15. In the step S16, operating units are instructed to execute instructions and actually execute the instructions. On completion of the instructions, an available destination register is determined, and then the write reservation bit is cleared in step S17.

As all processes from steps S12 to S17 assume an unprocessed branch instruction in the process flow, determination must be made in step 18 as to whether or not the unprocessed branch instruction is successfully terminated to determine an uncertain bit or where the anticipation of a branch does not come true. If the uncertain bit is determined before the unprocessed instruction terminates, the next instruction is unexpectedly executed against the purpose. The determination in step S18 is made to prevent this. It is repeated in step S18 until the unprocessed branch instruction terminates.

When the unprocessed branch instruction terminates (YES), determination is made in step S19 as to whether or not the anticipation of a branch comes true. If it does (YES), the uncertain bit is cleared in step S20. If it does not come true (NO), the selection bit for a register for future use defined in step S14 is restored in step S21, thus regenerating the register for future use.

After steps S20 and S21, processes of the current instruction terminate.

When no unprocessed branch instructions are detected in the determination in step S11 (NO), determination is made in step S22 as to whether or not all the preceding instructions are terminated. The steps after S22 are performed when the out-of-order, that is, irregular execution of instructions is permitted in the program sequence. When not all of them are terminated (NO), an uncertain bit and a selection bit are set in step S23 as indicated in step S13. In this case, a register number for future use and an instruction address Are reserved as indicated in steps S24, as in the above described step S14, to be used in steps S28 and S30 described later.

A write reservation bit is set in step S25; instructions are directed to be executed in step S26 and then the instructions are executed by operating units; and the write reservation bit is cleared in step S27. In step S28, determination is made as to whether or not all the preceding instructions terminate successfully. If they do not, the process in step S28 is repeated. The determination in step S28 means the comparison between the address in step S23 and that of the next executable instruction. If all the preceding instructions terminate successfully, the uncertain bit is cleared and the process terminates in step S29.

Thus, in the above described operation, instructions can be processed forward even if branch instructions are present in the program sequence.

If interrupt or exception occurs during the forward execution of instructions, the present execution must be suspended. If the execution is suspended during the forward execution of instructions, registers are also interrupted, thus requiring another register. Therefore, in the case of an interrupt, etc., the selection bit of the register reserved for future use in step S24 is restored to the original state in S30, and the instructions are executed.

In the above embodiment, the register file has a configuration of 4 read ports and 2 write ports. Generally, a configuration of 2N read ports and N write ports is considered desirable when N sets of operating units are used.

As described above, a processor embodying the present invention can enable an instruction after a branch process to be processed in parallel before the branch instruction is executed, thus resulting in a greatly improved processor performance.

Besides, with the above described write reservation flags and a write reservation identifier, the processor can easily control the write conflict to a register of the same address in the parallel process.

## Claims

1. A processor including:
register means (5; 18; 33-1 to 33-3) having a plurality of sets of registers (Ri), each such register set (Ri) having an individually-corresponding address (Ai) and comprising plural registers (R0i to RMi) that are all addressable using that individually-corresponding register address (Ai);
selection information storing means (6; 18; 36) having a plurality of selection information storing elements corresponding respectively to the said register sets (Ri), each such element being addressable using the register address (Ai) of its corresponding register set and serving to store selection information (Si) for its corresponding register set (Ri) for use in identifying which of the registers of that set was last selected in a predetermined selection sequence of the registers of the set; and
register selection control means (8; 14; 34) operable, during a write operation in which one of the register sets (Ri) is addressed using its said register address (Ai) and data is written in one of the registers of the addressed register set, to employ the said selection information (Si) stored in the selection information storing element corresponding to the addressed register set to select the next-available one of the registers of that set for the storage of the data, and to update the stored selection information (Si) for the register set (Ri) concerned;
characterised in that the processor has a plurality of operating units (9-1 to 9-N; 11, 12; 32-1 to 32-3) and is operable to perform parallel processing in which a first instruction (SO) of a program is executed by one of the operating units whilst a second instruction of the program (S4), following the said first instruction in the written sequence of instructions of the program, is executed by another one of the operating units;
and in that the processor further includes determination information storing means (7; 18; 37) having a plurality of determination information storing elements corresponding respectively to the said register sets, each such element being addressable using the said register address of its said corresponding register set and serving to store determination information (Ui) for its said corresponding register set, indicating whether or not the data written in such a write operation is known to constitute valid data, and also includes write judgement means (10; 14; 35) operable, when in the course of the said parallel processing it is not certain that the said second instruction will follow the said first instruction in the actual execution sequence of the program, to provisionally store, in the said determination information storing element corresponding to the register set addressed in such a write operation called for by the said second instruction, first determination information (Ui=1), indicating that any data written in the write operation concerned is not known to constitute valid data, whereupon the second instruction is executed, and, only when it is determined that the said second instruction will follow the first instruction in the actual execution sequence of the program, to store, in place of the said first determination information, second determination information (Ui=0) indicating that the written data is known to constitute valid data.

2. A processor as claimed in claim 1, wherein the said write judgement means (10; 14; 35) deem the execution of the said second instruction after the said first instruction to be uncertain when there is an unprocessed conditional branch instruction (S2) between the said first and second instructions (S0, S4) in the said written sequence of instructions.

3. A processor as claimed in claim 1, wherein the said write judgement means deem the execution of the said second instruction after the said first instruction to be uncertain when the actual execution sequence is permitted to be different from the said written sequence of instructions.

4. A processor as claimed in any preceding claim, wherein, when in the course of the said parallel processing it is not certain that the said second instruction will follow the said first instruction in the actual execution sequence of the program, before the said second instruction is executed the data held in the last-selected register of the register set that will be addressed in the said write operation called for by the said second instruction is preserved for future use and that data is restored if it is determined that the said second instruction will not follow the said first instruction in the said actual execution sequence.

5. A processor as claimed in claim 4, wherein, before the said second instruction is executed, the said selection information (Si), identifying the said last-selected register, is preserved and this selection information is restored in the event that it is determined that the said second instruction will not follow the said first instruction in the said actual execution sequence.

6. A processor as claimed in any preceding claim, further including:
a plurality of write reservation flags (Wi) corresponding respectively to the said register sets (Ri), each such flag (Wi) serving to indicate whether or not an available register of its said corresponding register set has been reserved for use in such a write operation, and being addressable using the said register address (Ai) of its said corresponding register set; and
write reservation control means for controlling the said write reservation flag (Wi) corresponding to each register set such that when an instruction calling for such a write operation is decoded such a write reservation is made using the write reservation flag corresponding to the register set (Ri) addressed in the write operation concerned, and such that the write reservation is released on completion of the write operation concerned.

7. A processor as claimed in claim 6, wherein the said write reservation flag (Wi) is set to make such a write reservation and is reset to release that write reservation.

8. A processor as claimed in any preceding claim, further comprising data-dependence determining means operable, when a new instruction is received, to determine whether or not the data processed by that new instruction is dependent upon the outcome of any previous instruction still being executed and, if so, to cause the execution of that new instruction to be deferred until it is determined that the outcome of the or each previous instruction concerned is known.

9. A processor as claimed in any preceding claim, wherein the said write judgement means (10; 14; 35) are operable, when a new instruction is received, to determine whether or not an unprocessed conditional branch instruction (S2) is present in the said written sequence of instructions between the said first and second instructions (S0, S4) and, if so, to store such first determination information (Ui=1) prior to execution of the said second instruction, and also operable, when it is determined that execution of the said conditional branch instruction (S2) concerned has been completed, to determine whether or not the said second instruction (S4) follows after the said first instruction (S0) in the actual execution sequence and, if so, to replace the stored first determination information (Ui=1) with such second determination information (Ui=0).

10. A processor as claimed in claim 9, operable to anticipate whether or not a branch specified in the said conditional branch instruction will be made as the outcome of execution of that instruction and to select, as the said second instruction to be executed before execution of the branch instruction is completed, the instruction that corresponds to the anticipated outcome, the said second determination information (Ui=0) only being stored in place of the said first determination information (Ui=1) if, on completion of the said conditional branch instruction, the actual outcome of the instruction coincides with the said anticipated outcome.

11. A processor as claimed in any preceding claim, wherein the said write judgement means (10; 14; 35) are operable, when a new instruction is received and there is no unprocessed conditional branch instruction, to detect whether or not execution of all instructions preceding the new instruction has terminated and, if not, to store such first determination information (Ui=1), and also operable, when it is subsequently determined after execution of the said new instruction that all the preceding instructions have terminated, to store such second determination information (Ui=0) in place of the said first determination information.

12. A processor as claimed in any preceding claim, wherein the said determination information storing element is an uncertain bit (Ui) which, when set, provides the said first determination information and, when reset, provides the said second determination information.

13. A processor as claimed in any preceding claim, wherein, when in the course of the said parallel processing an interrupt or an exception process occurs, the said selection information (Si), preserved for future use before execution of the said second instruction, is restored.

14. A parallel processing method using a processor as claimed in claim 6, which method comprises:
a first step (S10) of determining whether or not the data processed by a new instruction is dependent upon the outcome of any previous instruction that is still being executed and, if so, deferring execution of the new instruction until it is determined that the outcome of the or each previous instruction concerned is known;
a second step (S11) of determining whether or not an unprocessed conditional branch instruction is present in the said written instruction sequence between the said first and second instructions;
a third step (S12), executed in the event that such an unprocessed conditional branch instruction was found to be present in the said second step, of anticipating whether or not a branch specified by the branch instruction concerned will be made as the outcome of the execution of that instruction;
a fourth step (S13 to S17) of storing said first determination information (Ui=0), preserving the said selection information (Si), controlling the said write reservation flag (Wi) to make such a write reservation, executing the said instruction that corresponds to the outcome anticipated in the said third step, and then releasing the said write reservation;
a fifth step (S19) of determining, once execution of the said unprocessed branch instruction has been completed, whether or not the actual outcome of that instruction coincides with the anticipated outcome and, if so, replacing the stored first determination information (Ui=1) with such second determination information (Ui=0) but, if not, restoring the preserved selection information (Si);
a sixth step (S22 to S27), executed in the event that in the said second step (S11) it was found that no unprocessed branch instruction is present, of determining whether or not all preceding instructions are terminated and, if not, storing such first determination information (Ui=1) and preserving the said selection information for future use, whereafter the said sixth step continues by controlling the said write reservation flag (Wi) to make such a write reservation, executing the said new instruction, and then releasing the write reservation; and
a seventh step (S29) of replacing such first determination information (Ui=0) with such second determination information (Ui=0) when all instructions preceding the said new instruction have terminated.

15. A method as claimed in claim 14, wherein the said selection information (Si) preserved in the said sixth step (S24) is restored in the event that an interrupt or an exception process occurs.

16. A parallel processing method, for use in a processor that includes a plurality of operating units (9-1 to 9-N; 11, 12; 32-1 to 32-3) and also includes a plurality of sets of registers (5; 18; 33-1 to 33-3), each set comprising plural registers (R0i to RMi), which method comprises the steps of:
employing, during a write operation for writing data to an addressed register set (Ri), stored selection information (Si), corresponding to the addressed register set (Ri) and serving to identify which of the registers of the set was last selected in a predetermined selection sequence of the registers of that set, to select the next-available one of the registers of that set for the storage of the data, and updating the stored selection information (Si) corresponding to the addressed register set;
performing parallel processing in which a first instruction (S0) of a program is executed by one of the operating units whilst a second instruction (S4) of the program, following the said first instruction in the written sequence of instructions of the program, is executed by another one of the operating units; and
judging whether, in the course of such parallel processing, it is not certain that the said second instruction will follow the said first instruction in the actual execution sequence of the program and, if it is not certain, provisionally storing first determination information (Ui=0), corresponding to the register set to be addressed in such a write operation called for by the said second instruction and indicating that any data written in that write operation is not known to constitute valid data, whereupon the said second instruction is executed, and, only when it is determined that the said second instruction will follow the said first instruction in the said actual execution sequence, storing, in place of the stored first determination information, second determination information (Ui=0) indicating that the written data is known to constitute valid data.

## Patentansprüche

1. Prozessor, mit:
einer Registereinrichtung (5; 18; 33-1 bis 33-3), die eine Vielzahl von Sätzen von Registern (Ri) aufweist, wobei jeder solcher Registersatz (Ri) eine individuell entsprechende Adresse (Ai) besitzt und eine Vielzahl von Registern (R0i bis RMi) umfaßt, die alle unter Verwendung dieser individuell entsprechenden Registeradresse (Ai) adressierbar sind;
einer Wähl-Informations-Speichereinrichtung (6; 18; 36) mit einer Vielzahl von Wähl-Informations-Speicherelementen, die jeweils den Registersätzen (Ri) entsprechen, wobei jedes solches Element unter Verwendung der Registeradresse (Ai) von dessen entsprechendem Registersatz adressierbar ist und dazu dient, um ausgewählte Informationen (Si) für dessen entsprechenden Registersatz (Ri) zu speichern, und zwar für die Verwendung bei der Identifizierung, welches der Register dieses Satzes als letztes in einer vorbestimmten Auswählsequenz der Register des Satzes ausgewählt wurde; und
einer Register-Wähl-Steuereinrichtung (8; 14; 34), die während einer Einschreiboperation betreibbar ist, bei welcher einer der Registersätze (Ri) adressiert wird unter Verwendung von dessen Registeradresse (Ai) und wobei Daten in eines der Register des adressierten Registersatzes eingeschrieben werden, um die Auswählinformationen (Si), die in dem Auswähl-Informations-Speicherelement entsprechend dem adressierten Registersatz gespeichert sind, zum Auswählen des nächst verfügbaren einen der Register dieses Satzes zum Speichern der Daten zu verwenden, und um die gespeicherten Wählinformationen (Si) für den in Betracht stehenden Registersatz (Ri) auf den neuesten Stand zu bringen;
dadurch gekennzeichnet, daß der Prozessor eine Vielzahl von Operationseinheiten (9-1 bis 9-N; 11, 12; 32-1 bis 32-3) aufweist und so betreibbar ist, um eine parallele Verarbeitung durchzuführen, bei der ein erster Befehl (S0) eines Programms durch eine der Operationseinheiten ausgeführt wird, während ein zweiter Befehl des Programms (S4), der auf den ersten Befehl in der geschriebenen Sequenz der Befehle des Programms folgt, durch eine andere eine der Operationseinheiten ausgeführt wird;
und daß der Prozessor ferner eine Bestimmungs-Informations-Speichereinrichtung (7; 18; 37) enthält mit einer Vielzahl von Bestimmungs-Informations-Speicherelementen, die jeweils den Registersätzen entsprechen, wobei jedes solches Element unter Verwendung der Registeradresse von dessen entsprechendem Registersatz adressierbar ist und dazu dient, Bestimmungsinformationen (Ui) für dessen entsprechendem Registersatz zu speichern, die anzeigen, ob die Daten, die bei solch einer Einschreiboperation geschrieben werden, dafür bekannt sind, daß sie gültige Daten darstellen oder nicht, und auch eine Schreib-Beurteilungseinrichtung (10; 14; 35) enthält, die betreibbar ist, wenn im Laufe der parallelen Verarbeitung es nicht sicher ist, daß der zweite Befehl dem ersten Befehl in der tatsächlichen Ausführungssequenz des Programms folgt, um in dem Bestimmungs-Informations-Speicherelement entsprechend dem Registersatz, der bei solch einer Schreiboperation adressiert wird, nach der der zweite Befehl gerufen hat, erste Bestimmungsinformationen (Ui = 1) provisorisch zu speichern, wobei angezeigt wird, daß irgendwelche Daten, die bei der in Betracht stehenden Schreiboperation geschrieben werden, nicht dafür bekannt sind, daß sie gültige Daten darstellen, woraufhin der zweite Befehl ausgeführt wird und nur dann, wenn bestimmt wird, daß der zweite Befehl auf den ersten Befehl in der tatsächlichen Ausführungssequenz des Programms folgt, anstelle der ersten Bestimmungsinformationen zweite Bestimmungsinformationen (Ui = 0) gespeichert werden, die anzeigen, daß die geschriebenen Daten dafür bekannt sind, daß sie gültige Daten darstellen.

2. Prozessor nach Anspruch 1, bei dem die Schreib-Beurteilungseinrichtung (10; 14; 35) die Ausführung des zweiten Befehls nach dem ersten Befehl als unsicher deklariert, wenn ein nicht verarbeiteter bedingter Verzweigungsbefehl (S2) zwischen dem ersten und dem zweiten Befehl (S0, S4) in der geschriebenen Sequenz der Befehle vorhanden ist.

3. Prozessor nach Anspruch 1, bei dem die Schreib-Beurteilungseinrichtung die Ausführung des zweiten Befehls nach dem ersten Befehl als unsicher deklariert, wenn die tatsächliche Ausführungssequenz die Erlaubnis dafür hat, verschieden von der geschriebenen Sequenz der Befehle zu sein.

4. Prozessor nach irgendeinem der vorhergehenden Ansprüche, bei dem dann, wenn im Laufe der parallelen Verarbeitung es nicht sicher ist, daß der zweite Befehl dem ersten Befehl in der tatsächlichen Ausführungssequenz des Programms folgt, bevor der zweite Befehl ausgeführt wird und die in dem zuletzt ausgewählten Register des Registersatzes gehaltenen Daten, die bei der Schreiboperation, welche durch den zweiten Befehl aufgerufen wurde, adressiert wurde, für eine zukünftige Verwendung reserviert werden und daß die Daten umgespeichert werden, wenn bestimmt wurde, daß der zweite Befehl nicht auf den ersten Befehl in der tatsächlichen Ausführungssequenz folgt.

5. Prozessor nach Anspruch 4, bei dem, bevor der zweite Befehl ausgeführt wird, die Auswählinformationen (Si), welche das letzte ausgewählte Register identifizieren, aufbewahrt werden und daß diese Auswählinformationen für den Fall umgespeichert werden, daß bestimmt wurde, daß der zweite Befehl nicht auf den ersten Befehl in der tatsächlichen Ausführungssequenz folgt.

6. Prozessor nach irgendeinem der vorhergehenden Ansprüche, ferner mit:
einer Vielzahl von Schreib-Reservierungsflags (Wi) entsprechend jeweils den Registersätzen (Ri), wobei jedes solches Flag (Wi) dazu dient, anzuzeigen, ob ein verfügbares Register von dessen entsprechendem Registersatz für die Verwendung bei solch einer Einschreiboperation reserviert worden ist oder nicht, und welches unter Verwendung der Registeradresse (Ai) des entsprechenden Registersatzes adressierbar ist; und
einer Schreib-Reservierungs-Steuereinrichtung zum Steuern des Schreib-Reservierungsflags (Wi) entsprechend jedem Registersatz derart, daß dann, wenn ein Befehl, der nach solch einer Einschreiboperation ruft, dekodiert wird, solch eine Schreibreservierung unter Verwendung des Schreib-Reservierungsflags durchgeführt wird, entsprechend dem Registersatz (Ri), der bei der in Betracht stehenden Einschreiboperation adressiert wird, und derart, daß die Schreibreservierung bei Vervollständigung der in Betracht stehenden Einschreiboperation freigegeben wird.

7. Prozessor nach Anspruch 6, bei dem das Schreib-Reservierungsflag (Wi) gesetzt wird, um solch eine Schreibreservierung durchzuführen, und zurückgesetzt wird, um diese Schreibreservierung freizugeben bzw. aufzuheben.

8. Prozessor nach irgendeinem der vorhergehenden Ansprüche, ferner mit einer von Daten abhängigen Bestimmungseinrichtung, die dann, wenn ein neuer Befehl empfangen wird, betreibbar ist, um zu bestimmen, ob die durch diesen neuen Befehl verarbeiteten Daten abhängig von dem Ergebnis irgendeines früheren Befehls sind, der noch ausgeführt wird, und wenn dem so ist, zu bewirken, daß die Ausführung dieses neuen Befehls solange verzögert wird, bis bestimmt wurde, daß das Ergebnis von dem oder jedem in Betracht stehenden früheren Befehl bekannt ist.

9. Prozessor nach irgendeinem der vorhergehenden Ansprüche, bei dem die Schreib-Beurteilungseinrichtung (10; 14; 35) betreibbar ist, wenn ein neuer Befehl empfangen wird, zu bestimmen, ob ein nicht verarbeiteter bedingter Verzweigungs- oder Sprungbefehl (S2) in der geschriebenen Sequenz der Befehle zwischen dem ersten und dem zweiten Befehl (S0, S4) vorhanden ist oder nicht und, wenn dieser vorhanden ist, solch eine erste Bestimmungsinformation (Ui = 1) vor der Ausführung des zweiten Befehls zu speichern, und die auch betreibbar ist, dann, wenn bestimmt wurde, daß die Ausführung des in Betracht stehenden bedingten Verzweigungs- oder Sprungbefehls (S2) vervollständigt worden ist, zu bestimmen, ob der zweite Befehl (S4) auf den ersten Befehl (S0) in der tatsächlichen Ausführungssequenz folgt oder nicht und, wenn dieser folgt, die gespeicherte erste Bestimmungsinformation (Ui = 1) durch solch eine zweite Bestimmungsinformation (Ui = 0) zu ersetzen.

10. Prozessor nach Anspruch 9, der so betreibbar ist, um vorwegzunehmen, ob eine in einem bedingten Verzweigungsbefehl spezifizierte Verzweigung gemacht werden wird, und zwar als Ergebnis der Ausführung dieses Befehls und um, wenn der zweite Befehl, der vor der Ausführung des Verzweigungsbefehles auszuführen ist, vervollständigt worden ist, den Befehl auszuwählen, welcher dem vorweggenommenen Ergebnis entspricht, wobei die zweite Bestimmungsinformation (Ui = 0) lediglich anstelle der ersten Bestimmungsinformation (Ui = 1) gespeichert wird, wenn bei der Vervollständigung des bedingten Verzweigungsbefehles das tatsächliche Ergebnis des Befehls mit dem vorweggenommenen Ergebnis koinzidiert.

11. Prozessor nach irgendeinem der vorhergehenden Ansprüche, bei dem die Schreib-Beurteilungseinrichtung (10; 14; 35) so betreibbar ist, um dann, wenn ein neuer Befehl empfangen wird und kein nicht verarbeiteter bedingter Verzweigungsbefehl vorhanden ist, zu detektieren, ob die Ausführung aller Befehle, die dem neuen Befehl vorangegangen sind, beendet worden ist oder nicht und, wenn die Beendigung nicht stattgefunden hat, die erste Bestimmungsinformation (Ui = 1) zu speichern, und auch so betreibbar ist, um dann, wenn nachfolgend nach der Ausführung des neuen Befehls bestimmt wird, daß alle vorhergehenden Befehle beendet worden sind, solch eine zweite Bestimmungsinformation (Ui = 0) anstelle der ersten Bestimmungsinformation zu speichern.

12. Prozessor nach irgendeinem der vorhergehenden Ansprüche, bei dem das die Bestimmungsinformation speichernde Element aus einem Ungewißheitsbit (Ui) besteht, welches dann, wenn es gesetzt wird, die erste Bestimmungsinformation vorsieht und, wenn es zurückgesetzt wird, die zweite Bestimmungsinformation vorsieht.

13. Prozessor nach irgendeinem der vorhergehenden Ansprüche, bei dem dann, wenn im Laufe der parallelen Verarbeitung ein Interrupt oder ein Ausnahmeprozeß auftritt, die Wählinformation (Si), die für die zukünftige Verwendung reserviert wurde, und zwar vor der Ausführung des zweiten Befehls, wieder hergestellt wird.

14. Parallel-Verarbeitungsverfahren unter Verwendung eines Prozessors nach Anspruch 6, welches Verfahren umfaßt:
einen ersten Schritt (S10) zum Bestimmen, ob die durch einen neuen Befehl verarbeiteten Daten von dem Ergebnis irgendeines früheren Befehls abhängig sind, der noch ausgeführt wird, und, wenn dies der Fall ist, Hinausschieben der Ausführung des neuen Befehls, bis bestimmt worden ist, daß das Ergebnis des oder jedes früheren in Betracht stehenden Befehls bekannt ist;
einen zweiten Schritt (S11) zum Bestimmen, cb ein nicht verarbeiteter bedingter Verzweigungsbefehl in der geschriebenen Befehlssequenz zwischen dem ersten und dem zweiten Befehl vorhanden ist oder nicht;
einen dritten Schritt (S12), der für den Fall ausgeführt wird, daß solch ein nicht verarbeiteter bedingter Verzweigungsbefehl bei dem zweiten Schritt als vorhanden gefunden wurde und welcher dritte Schritt darin besteht, vorweg zu sagen, ob eine durch den in Betracht stehenden Verzweigungsbefehl spezifizierte Verzweigung als Ergebnis der Ausführung dieses Befehls vorgenommen wird oder nicht;
einen vierten Schritt (S13 bis S17) zum Speichern der ersten Bestimmungsinformation (Ui = 0) mit einer Aufbewahrung der zweiten Information (Si) und zum Steuern des Schreib-Reservierungsflags (Wi), um solch eine Schreibreservierung zu treffen, Ausführen des genannten Befehls, der dem bei dem Schritt vorweggenommenen Ergebnis entspricht, und dann Freigeben oder Aufheben der Schreibreservierung;
einen fünften Schritt (S19) zum Bestimmen, nachdem die Ausführung des nicht verarbeiteten Verzweigungsbefehls vervollständigt worden ist, ob das tatsächliche Ergebnis dieses Befehls mit dem vorweggenommenen Ergebnis übereinstimmt oder nicht, und, wenn dies der Fall ist, Ersetzen der gespeicherten ersten Bestimmungsinformation (Ui = 1) durch solch eine zweite Bestimmungsinformation (Ui = 0), jedoch, wenn dies nicht der Fall ist, Wiederherstellen der aufbewahrten Wählinformation (Si);
einen sechsten Schritt (S22 bis S27), der für den Fall ausgeführt wird, daß bei dem zweiten Schritt (S11) festgestellt wurde, daß kein nicht verarbeiteter Verzweigungsbefehl vorhanden ist, wobei bei dem sechsten Schritt bestimmt wird, ob alle vorhergehenden Befehle beendet worden sind oder nicht, und, wenn sie nicht beendet worden sind, Speichern dieser ersten Bestimmungsinformation (Ui = 1) und Aufbewahren der Wählinformation für die zukünftige Verwendung, woraufhin der sechste Schritt dadurch fortgesetzt wird, indem das Schreib-Reservierungsflag (Wi) gesteuert wird, um solch eine Schreibreservierung zu treffen, Ausführen des neuen Befehls und dann Freigeben oder Löschen der Schreibreservierung; und
einen siebten Schritt (S29) zum Ersetzen dieser ersten Bestimmungsinformation (Ui = 0) durch diese zweite Bestimmungsinformation (Ui = 0), wenn alle die Befehle, die dem neue Befehl vorangegangen sind, beendet worden sind.

15. Verfahren nach Anspruch 14, bei dem die Wählinformation (Si), die bei dem sechsten Schritt (S24) aufbewahrt wird, für den Fall wieder hergestellt wird, daß ein Interrupt oder ein Ausnahmeprozeß auftritt.

16. Parallel-Verarbeitungsverfahren für die Verwendung in einem Prozessor, der eine Vielzahl von Operationseinheiten (9-1 bis 9-N; 11, 12; 32-1 bis 32-3) enthält und auch eine Vielzahl von Sätzen an Registern (5; 18; 33-1 bis 33-3) enthält, wobei jeder Satz eine Vielzahl von Registern (ROi bis RMi) umfaßt, wobei das Verfahren die folgenden Schritte aufweist:
Verwenden der gespeicherten Wählinformation (Si) während einer Einschreiboperation zum Einschreiben von Daten in einen adressierten Registersatz (Ri), welche Information dem adressierten Registersatz (Ri) entspricht und dazu dient, zu identifizieren, welches der Register des Satzes als letztes in einer vorbestimmten Auswählsequenz der Register dieses Satzes ausgewählt worden ist, um das nächst verfügbare eine der Register dieses Satzes für das Speichern von Daten auszuwählen und um die gespeicherte Wählinformation (Si) entsprechend dem adressierten Registersatz auf den neuesten Stand zu bringen;
Durchführen einer Parallelverarbeitung, bei der ein erster Befehl (S0) eines Programms durch eine der Operationseinheiten ausgeführt wird, während ein zweiter Befehl (S4) des Programms, der auf den zweiten Befehl in der geschriebenen Sequenz der Befehle des Programms folgt, durch eine andere eine der Operationseinheiten ausgeführt wird; und
Beurteilen, ob im Laufe solch einer parallelen Verarbeitung es nicht gewiß ist, daß der zweite Befehl auf den ersten Befehl in der tatsächlichen Ausführungssequenz des Programms folgt und, wenn dies nicht sicher ist, provisorisches Speichern der ersten Bestimmungsinformation (Ui = 0) entsprechend dem Registersatz, der in solch einer Schreiboperation zu adressieren ist, nach der der zweite Befehl gerufen hat, und Anzeigen, daß irgendwelche Daten, die in dieser Schreiboperation geschrieben wurden, nicht dafür bekannt sind, daß sie gültige Daten darstellen, woraufhin der zweite Befehl ausgeführt wird, und nur dann, wenn bestimmt wird, daß der zweite Befehl auf den ersten Befehl in der tatsächlichen Ausführungssequenz folgt, Speichern der zweiten Bestimmungsinformation (Ui = 0) anstelle der gespeicherten ersten Bestimmungsinformation, um anzuzeigen, daß die geschriebenen Daten dafür bekannt sind, daß sie gültige Daten darstellen.

## Revendications

1. Processeur comprenant :
des moyens formant registres (5 ; 18 ; 33-1 à 33-3) comportant une pluralité d'ensembles de registres (Ri), chacun de ces ensembles de registres (Ri) ayant une adresse individuelle (Ai) correspondante et comprenant plusieurs registres (R0i à RMi) qui sont tous adressables en utilisant cette adresse de registre individuelle (Ai) correspondante ;
des moyens de mémorisation d'informations de sélection (6 ; 18 ; 36) comportant une pluralité d'éléments de mémorisation d'informations de sélection correspondant, respectivement, auxdits ensembles de registres (Ri), chacun de ces éléments étant adressable en utilisant l'adresse de registre (Ai) de son ensemble de registres correspondant et servant à mémoriser des informations de sélection (Si) pour son ensemble de registres (Ri) correspondant destinées à être utilisées pour identifier lequel des registres de cet ensemble a été sélectionné en dernier dans une séquence de sélection prédéterminée des registres de l'ensemble ; et
des moyens de commande de sélection de registre (8 ; 14 ; 34) susceptibles d'être mis en oeuvre, pendant une opération d'écriture dans laquelle un des ensembles de registres (Ri) est adressé en utilisant sa dite adresse de registre (Ai) et des données sont écrites dans un des registres de l'ensemble de registres adressé, pour employer lesdites informations de sélection (Si) memorisées dans l'élément de mémorisation d'informations de sélection correspondant à l'ensemble de registres adressé afin de sélectionner le registre disponible suivant parmi les registres de cet ensemble pour la mémorisation des données et pour mettre à jour les informations de sélection mémorisées (Si) pour l'ensemble de registres (Ri) concerné ;
caractérisé en ce que le processeur comprend une pluralité d'unités d'exécution (9-1 à 9-N ; 11, 12 ; 32-1 à 32-3) et est susceptible d'être mis en oeuvre pour exécuter un traitement en parallèle dans lequel une première instruction (S0) d'un programme est exécutée par l'une des unités d'exécution tandis qu'une seconde instruction du programme (S4), suivant ladite première instruction dans la séquence écrite d'instructions du programme, est exécutée par l'autre des unités d'exécution ;
et en ce que le processeur comprend, de plus, des moyens de mémorisation d'informations de détermination (7 ; 18 ; 37) comportant une pluralité d'éléments de mémorisation d'informations de détermination correspondant, respectivement, auxdits ensembles de registres, chacun de ces éléments étant adressable en utilisant ladite adresse de registre de son dit ensemble de registres correspondant et servant à mémoriser des informations de détermination (Ui) pour son dit ensemble de registres correspondant, indiquant si, oui ou non, les données écrites dans une telle opération d'écriture sont reconnues comme constituant des données valides, et comprend, également, des moyens de jugement d'écriture (10 ; 14 ; 35) susceptibles d'être mis en oeuvre, lorsqu'il n'est pas certain, au cours dudit traitement en parallèle, que ladite seconde instruction suivra ladite première instruction dans la séquence d'exécution réelle du programme, pour mémoriser provisoirement, dans ledit élément de mémorisation d'informations de détermination correspondant à l'ensemble de registres adressé dans une telle opération d'écriture demandée par ladite seconde instruction, des premières informations de détermination (Ui=1), indiquant que les données quelconques écrites dans l'opération d'écriture concernée ne sont pas reconnues comme constituant des données valides, sur quoi la seconde instruction est exécutée et pour, seulement lorsqu'il est déterminé que ladite seconde instruction suivra la première instruction dans la séquence d'exécution réelle du programme, pour mémoriser, à la place desdites premières informations de détermination, des secondes informations de détermination (Ui=0) indiquant que les données écrites sont reconnues comme constituant des données valides.

2. Processeur selon la revendication 1, dans lequel lesdits moyens de jugement d'écriture (10 ; 14 ; 35) jugent l'exécution de ladite seconde instruction après ladite première instruction comme incertaine lorsqu'il y a une instruction de branchement conditionnel (S2) non-traitée entre lesdites première et seconde instructions (S0, S4) dans ladite séquence écrite d'instructions.

3. Processeur selon la revendication 1, dans lequel lesdits moyens de jugement d'écriture jugent l'exécution de ladite seconde instruction après ladite première instruction comme incertaine lorsque la séquence d'exécution réelle est autorisée à être différente de ladite séquence écrite d'instructions.

4. Processeur selon l'une quelconque des revendications précédentes, dans lequel, lorsqu'il n'est pas certain, au cours dudit traitement en parallèle, que ladite seconde instruction suivra ladite première instruction dans la séquence d'exécution réelle du programme, avant que ladite seconde instruction ne soit exécutée, les données contenues dans le registre sélectionne en dernier de l'ensemble de registres qui sera adressé dans ladite opération d'écriture demandée par ladite seconde instruction sont conservées pour une utilisation future et ces données sont restituées s'il est déterminé que ladite seconde instruction ne suivra pas ladite première instruction dans ladite séquence d'exécution réelle.

5. Processeur selon la revendication 4, dans lequel, avant que ladite seconde instruction ne soit exécutée, lesdites informations de sélection (Si), identifiant ledit registre sélectionné en dernier, sont conservées et ces informations de sélection sont restituées dans le cas où il est déterminé que ladite seconde instruction ne suivra pas ladite première instruction dans ladite séquence d'exécution réelle.

6. Processeur selon l'une quelconque des revendications précédentes comprenant, de plus :
une pluralité d'indicateurs de réservation d'écriture (Wi) correspondant, respectivement, auxdits ensembles de registres (Ri), chacun desdits indicateurs (Wi) servant à indiquer si, oui ou non, un registre disponible de son dit ensemble de registres correspondant a été réservé afin d'être utilisé dans une telle opération d'écriture, et étant adressable en utilisant ladite adresse de registre (Ai) de son dit ensemble de registres correspondant ; et
des moyens de commande de réservation d'écriture destinés à commander ledit indicateur de réservation d'écriture (Wi) correspondant à chaque ensemble de registres, de sorte que, lorsqu'une instruction demandant une telle opération d'écriture est décodée, une telle réservation d'écriture soit faite en utilisant l'indicateur de réservation d'écriture correspondant à l'ensemble de registres (Ri) adressé dans l'opération d'écriture concernée, et de sorte que la réservation d'écriture soit libérée à l'achèvement de l'opération d'écriture concernée.

7. Processeur selon la revendication 6, dans lequel ledit indicateur de réservation d'écriture (Wi) est positionné pour faire une telle réservation d'écriture et est réinitialisé pour libérer cette réservation d'écriture.

8. Processeur selon l'une quelconque des revendications précédentes, comprenant, de plus, des moyens de détermination de dépendance de données susceptibles d'être mis en oeuvre, lorsqu'une nouvelle instruction est reçue, pour déterminer si, oui ou non, les données traitées par cette nouvelle instruction dépendent du résultat d'une quelconque instruction précédente qui est toujours en cours d'exécution et, si c'est le cas, pour différer l'exécution de cette nouvelle instruction jusqu'à ce qu'il soit déterminé que le résultat de la ou de chaque instruction précédente concernée est connu.

9. Processeur selon l'une quelconque des revendications précédentes, dans lequel lesdits moyens de jugement d'écriture (10 ; 14 ; 35) sont susceptibles d'être mis en oeuvre, lorsqu'une nouvelle instruction est reçue, pour déterminer si, oui ou non, une instruction de branchement conditionnel (S2) non-traitée est présente dans ladite séquence écrite d'instructions entre lesdites première et seconde instructions (S0, S4) et, si c'est le cas, pour mémoriser ces premières informations de détermination (Ui=1) avant l'exécution de ladite seconde instruction, et également susceptibles d'être mis en oeuvre, lorsqu'il est déterminé que l'exécution de ladite instruction de branchement conditionnel (S2) concernée a été achevée, pour déterminer si, oui ou non, ladite seconde instruction (S4) suit ladite première instruction (S0) dans la séquence d'exécution réelle et, si c'est le cas, pour remplacer lesdites premières informations de détermination (Ui=1) mémorisées par ces secondes informations de détermination (Ui=0).

10. Processeur selon la revendication 9, susceptible d'être mis en oeuvre pour anticiper si, oui ou non, un branchement spécifié dans ladite instruction de branchement conditionnel sera exécuté comme le résultat de l'exécution de ladite instruction et pour sélectionner, comme ladite seconde instruction à exécuter avant que l'exécution de l'instruction de branchement ne soit achevée, l'instruction qui correspond au résultat anticipé, lesdites secondes informations de détermination (Ui=0) uniquement étant mémorisées à la place desdites premières informations de détermination (Ui=1) si, à l'achèvement de ladite instruction de branchement conditionnel, le résultat réel de l'instruction coïncide avec ledit résultat anticipé.

11. Processeur selon l'une quelconque des revendications précédentes, dans lequel lesdits moyens de jugement d'écriture (10 ; 14 ; 35) sont susceptibles d'être mis en oeuvre, lorsqu'une nouvelle instruction est reçue et qu'il n'y a aucune instruction de branchement conditionnel non-traitée, pour détecter si, oui ou non, l'exécution de toutes les instructions précédant la nouvelle instruction est terminée et, si ce n'est pas le cas, pour mémoriser ces premières informations de détermination (Ui=1), et également susceptibles d'être mis en oeuvre, lorsqu'il est déterminé, par la suite, après l'exécution de ladite nouvelle instruction, que toutes les instructions précedentes sont terminées, pour mémoriser ces secondes informations de détermination (Ui=0) à la place desdites premières informations de détermination.

12. Processeur selon l'une quelconque des revendications précédentes, dans lequel ledit élément de mémorisation d'informations de détermination est un bit incertain (Ui) qui, lorsqu'il est positionné, fournit lesdites premières informations de détermination et, lorsqu'il est réinitialisé, fournit lesdites secondes informations de détermination.

13. Processeur selon l'une quelconque des revendications précédentes, dans lequel, lorsqu'au cours dudit traitement en parallèle, une interruption ou un traitement d'exception se produit, lesdites informations de sélection (Si), conservées pour une utilisation future avant l'exécution de ladite seconde instruction, sont restituées.

14. Méthode de traitement en parallèle utilisant un processeur selon la revendication 6, laquelle méthode comprend :
une première étape (S10) consistant à déterminer si, oui ou non, les données traitées par une nouvelle instruction dépendent du résultat d'une quelconque instruction précédente qui est toujours en cours d'exécution et, si c'est le cas, différer l'exécution de la nouvelle instruction jusqu'à ce qu'il soit déterminé que le résultat de la ou de chaque instruction précédente concernée est connu ;
une seconde étape (S11) consistant à déterminer si, oui ou non, une instruction de branchement conditionnel non-traitée est présente dans ladite séquence d'instructions écrite entre lesdites première et seconde instructions ;
une troisième étape (S12), exécutée dans le cas où une telle instruction de branchement conditionnel non-traitée s'est avérée présente dans ladite seconde étape, consistant à anticiper si, oui ou non, un branchement spécifié par l'instruction de branchement concernée sera exécuté comme le résultat de l'exécution de cette instruction ;
une quatrième étape (S13 à S17) consistant à mémoriser lesdites premières informations de détermination (Ui=0), conserver lesdites informations de sélection (Si), commander ledit indicateur de réservation d'écriture (Wi) afin de faire une telle réservation d'écriture, exécuter ladite instruction qui correspond au résultat anticipé dans ladite troisième étape et, ensuite, libérer ladite réservation d'écriture ;
une cinquième étape (S19) consistant à déterminer, une fois que l'exécution de ladite instruction de branchement non-traitée a été achevée, si, oui ou non, le résultat réel de cette instruction coïncide avec le résultat anticipé et, si c'est le cas, remplacer les premières informations de détermination (Ui=1) mémorisées par ces secondes informations de détermination (Ui=0) mais, si ce n'est pas le cas, restituer les informations de sélection (Si) conservées ;
une sixième étape (S22 à S27), exécutée dans le cas où il s'est avéré dans ladite seconde étape (S11) qu'aucune instruction de branchement non-traitée n'était présente, consistant à déterminer si, oui ou non, toutes les instructions précédentes sont terminées et, si ce n'est pas le cas, mémoriser ces premières informations de détermination (Ui=1) et conserver lesdites informations de sélection pour une utilisation future, après quoi ladite sixième étape se poursuit par la commande dudit indicateur de réservation d'écriture (Wi) afin de faire une telle réservation d'écriture, l'exécution de ladite nouvelle instruction et, ensuite, la libération de la réservation d'écriture ; et
une septième étape (S29) consistant à remplacer ces premières informations de détermination (Ui=1) par ces secondes informations de détermination (Ui=0) lorsque toutes les instructions précédant ladite nouvelle instruction sont terminées.

15. Méthode selon la revendication 14, dans laquelle lesdites informations de sélection (Si) conservées dans ladite sixième étape (S24) sont restituées dans le cas où une interruption ou un traitement d'exception se produit.

16. Méthode de traitement en parallèle, destinée à être utilisée dans un processeur qui comprend une pluralité d'unités d'exécution (9-1 à 9-N ; 11, 12 ; 32-1 à 32-3) et comprend, également, une pluralité d'ensembles de registres (5 ; 18 ; 33-1 à 33-3), chaque ensemble comprenant plusieurs registres (R0i à RMi), laquelle méthode comprend les étapes consistant à :
employer, pendant une opération d'écriture pour écrire des données vers un ensemble de registres (Ri) adressé, les informations de sélection (Si) mémorisées, correspondant à l'ensemble de registres (Ri) adressé et servant à identifier lequel des registres de l'ensemble a été sélectionné en dernier dans une séquence de sélection prédéterminée des registres de cet ensemble, pour sélectionner le registre disponible suivant parmi les registres de cet ensemble pour la mémorisation des données et mettre à jour les informations de sélection (Si) mémorisées correspondant à l'ensemble de registres adressé ;
exécuter un traitement en parallèle dans lequel une première instruction (S0) d'un programme est exécutée par l'une des unités d'exécution tandis qu'une seconde instruction (S4) du programme, suivant ladite première instruction dans la séquence écrite d'instructions du programme, est exécutée par une autre des unités d'exécution ; et
juger si, au cours de ce traitement en parallèle, il n'est pas certain que ladite seconde instruction suivra ladite première instruction dans la séquence d'exécution réelle du programme et, si ce n'est pas certain, mémoriser provisoirement les premières informations de détermination (Ui=0), correspondant à l'ensemble de registres à adresser dans une telle opération d'écriture demandée par ladite seconde instruction et indiquer que les données dans cette opération d'écriture ne sont pas reconnues comme constituant des donnée valides, sur quoi ladite seconde instruction est exécutée et, uniquement lorsqu'il est déterminé que ladite seconde instruction suivra ladite première instruction dans ladite séquence d'exécution réelle, mémoriser, à la place des premières informations de détermination mémorisées, les secondes informations de détermination (Ui=0) indiquant que les données écrites sont reconnues comme constituant des données valides.
